Europäisches Patentamt

(19) European Patent Office

Office européen des brevets

(11) Publication number: **0 128 138**
**B1**

(12) **EUROPEAN PATENT SPECIFICATION**

(45) Date of publication of patent specification: **18.10.89**

(21) Application number: **83900027.0**

(22) Date of filing: **11.12.82**

(86) International application number:
**PCT/EP82/00260**

(87) International publication number:
**WO 84/02263 21.06.84 Gazette 84/15**

(51) Int. Cl.⁴: **A 61 C 1/00**

(54) PNEUMATICALLY CONTROLLED, POWER-DRIVEN TOOL.

(43) Date of publication of application:
**19.12.84 Bulletin 84/51**

(45) Publication of the grant of the patent:
**18.10.89 Bulletin 89/42**

(84) Designated Contracting States:
**DE FR GB NL**

(56) References cited:
**FR-A-2 281 097**
**GB-A-1 076 787**
**US-A-2 561 663**
**US-A-2 561 668**
**US-A-4 106 198**

(73) Proprietor: **GOET, Richard Claas**
**14I Prinseneiland**
**NL-1013 LR Amsterdam (NL)**

(72) Inventor: **GOET, Richard Claas**
**14I Prinseneiland**
**NL-1013 LR Amsterdam (NL)**

(74) Representative: **Lips, Hendrik Jan George, Ir. et al**
**HAAGSCH OCTROOIBUREAU Breitnerlaan 146**
**NL-2596 HG Den Haag (NL)**

## Description

This invention related to a control device for dental tools and the like, comprising a pneumatic system with an elongated, foot depressable air filled tube connected to an air pressure chamber in communication with the environment through an electrically controlled valve which is closed when under electric power, an on/off main power switch set on by lifting a dental tool from its tool holder and thus actuating said electrically controlled valve; said air pressure chamber being connected to an air pressure sensing control means for delivering an electric control signal to said lifted dental tool if the air filled tube is depressed by foot.

Such control control devices are already known. US—A—2,561,663 discloses a control means for dental engines consisting of an air filled pneumatic tube, connected to the atmosphere through a solenoid actuated valve, said solenoid being controlled by a switch closing the solenoids circuit, when the dental tool is lifted from its suspension hook. After lifting the dental tool, foot pressure on the pneumatic tube causes movement of a diaphragm in a pressure chamber in response to pneumatic pressure, said diaphragm being connected to an micro switch controlling the operation of the motor driving the dental tool, such as a dental drill. Said US patent is copending with US—A—2,561.668 in which is disclosed a hydraulic tube control for switching on and regulating the motor speed. Thereto is used a system of cam switches each of them connected in parallel circuit for motor feed. By subsequently depressing and releasing the pneumatic tube by food, it is possible to switch over stepwise from the one circuit to the other so that a stepwise motor speed control is obtained.

A hydraulic control for dental operation is further known from FR—A—2,281,097. In said French patent a dental utensil such as a drill driven by a fluid motor, is controlled by a hydraulic system comprising a depressable tube controlling a mercury column short circuiting subsequently contacts of a voltge divider included in the drive circuit of a solenoid valve in the fluid circuit of the fluid motor. Thus, by depressing the hydraulic tube by food, a semicontinuous regulation is obtained.

It is the object of the present invention to improve the flexibility of such control systems for more flexibility in use with the add of modern electronic circuits. Thereto the present invention provides a control device for dental tools as described in the preamble, characterized in that said air pressure control means comprises an electronic circuit comprising a pressure sensitive integrated circuit for delivering continuous electric output signals in response to depressing of the air filled tube when said tool has been lifted from its tool holder, the magnitude of said output signals corresponding to the foot pressure on said air filled tube; a first output of said electronic circuit which delivers the said control signal being provided with a first blocking means for blocking output signals below a first minimum level, a second output of said electronic circuit for imposing on said tool a second function at a predetermined higher foot pressure said second output being provided with a second blocking means for blocking output signals below a second level higher than said first level.

With the add of the pressure sensitive integrated circuit it is on the one hand possible to obtain a continuous speed control for the drive motor whereas on the other hand two separate functions or separate utensils can be switched on by setting of two different output levels so that one can perform selectively with one or more separate functions.

There are still further possibilities for improvement. Thus, the applicability of the control unit can be increased by an additional pulse detecting circuit. For instance the control device could be actuated by two consecutively foot operated air pulses. Only in case the tube controller is activated from its position of rest, two air pulses being received shortly after each other may actuate a timing device and the output signal of this timing device could be applied to control other functional devices. Such as a so-called tubomatic motor which, in operation, brings a dental tool that is no longer used, after a predetermined period automatically back in its resting position in the tool stand. Another application to be visualized could be to reverse the direction of rotation of a dental tool. Sometimes it may be recommended to let the actuation of a reversely directed movement of a dental tool being preceded by e.g. an audible signal in order to avoid sudden undesired detraction.

It is also considered that various other functions could be operated by means of the additional pulse detecting circuit. In the application to electro-surgery, the additional air pulse or air signal could be used for switching to another kind of frequency and it would also be feasible to actuate the opening of a door giving entrance to the waiting room or the like.

The invention will be more completely understood by reference to the following description of an embodiment and the annexed drawing wherein:

Fig. 1 is a diagrammatic view of a device in accordance with the invention.

Fig. 2 is a diagram showing the relationship between motor speed and air pressure.

Fig. 3 is a circuit diagram of the inventive electronic control circuit and

Fig. 4 shows a diagram for additional signalling of the control device.

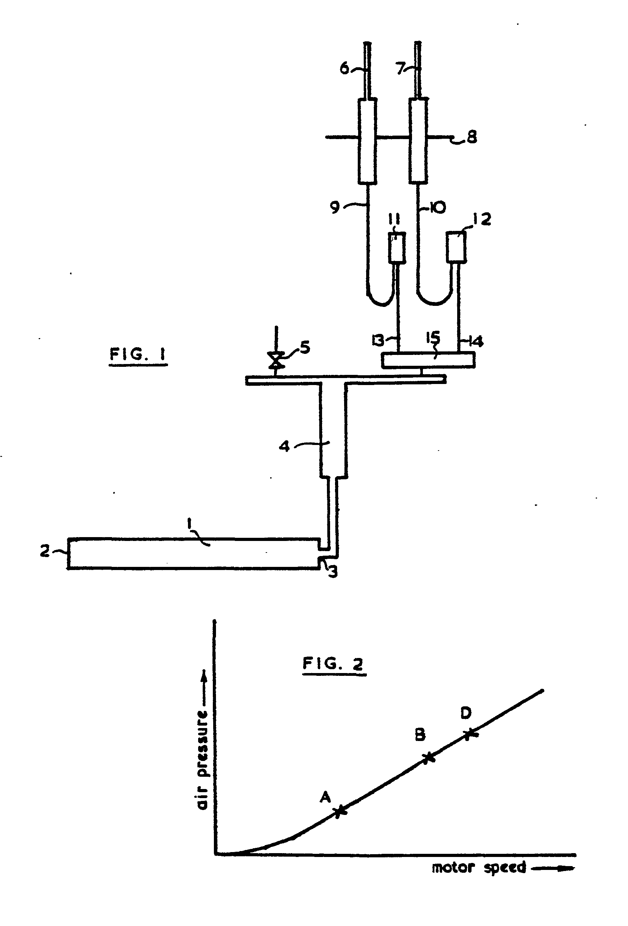

In Fig. 1 a tube controller is shown schematically at 1, normally consisting of a rubber tube which is closed at one end 2 and its other end 3 being connected with an air chamber 4. The air chamber 4 together with the tube controller 1 contains a volume of air which normally, when the tube controller is not in use, has an open connection with the air in the room by means of the air valve 5. Dental tools 6 and 7, such as a low speed micromotor and a high speed air rotor for drilling tools, are positioned in their tool clip on the tool stand, here schematically shown at 8. Each tool 6, 7 is connected by means of a flexible power operating means 9, 10 respectively to its motor drive, e.g. a micromotor 11 and an air rotor 12. Power control of the motor drives takes place through power actuating lines 13, 14 which are connected to schematically shown integrated circuit chip means 15. The IC15, which stands in direct connection with the air pressure which is created in the tube controller 1 and so IC15 is sending the pressure of the air and is converting such air pressure into corresponding electric signals for controlling eventually the rate of electric power supply to the motor drive of the selected dental tool.

The device makes use of a universal foot pedal shaped as pneumatic tube which does not function as the main on/off switch but which allows a continuous adjustment of the power supply to a dental tool during its function. The on/off function is performed by lifting the dental tool from its tool stand and bringing it back respectively in its resting position upon said tool stand. Any desired continuous i.e. uninterrupted smooth operation of the tool is fully adjustable by means of the control device by exerting exterior pressure upon the tube. Naturally the reaction upon the foot pressure must be preset with respect to the electrical response through said IC chip means in order to obtain any desired traject of responsive power drive.

The air pressure/motor speed diagram of Fig. 2 shows the operation of a micromotor for a drill running dry till A, another switch being activated to open up a water spray cooling circuit e.g. at constant water pressure. While reaching a much higher speed at B, an audible signal could be provided for and at D another desired operation could be actuated if such a demand would practically be needed. All functions can be easily derived by presetting appropriate values for the various electrically adjustable components in the control system which will be described hereinafter.

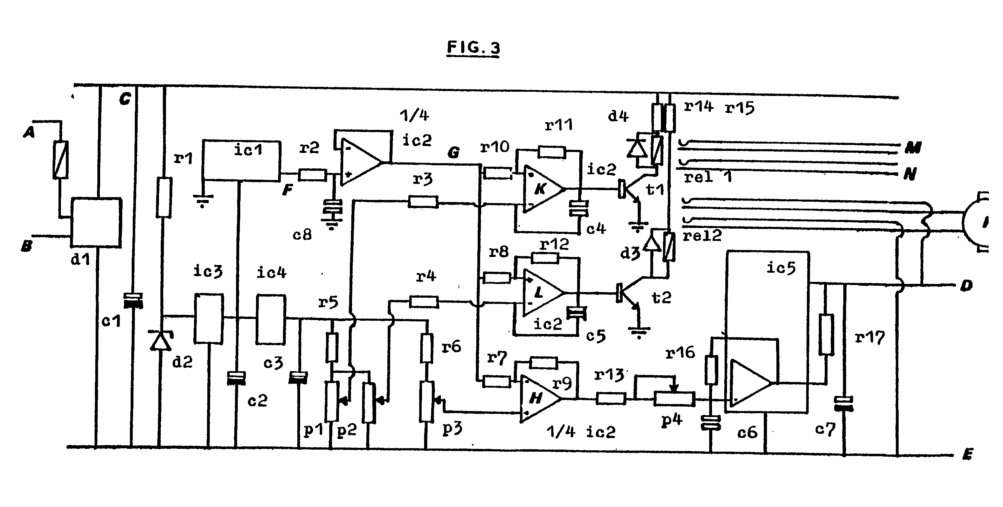

Fig. 3 gives a control circuit designed for operating a dental micromotor of 40W and a power consumption between 6V and 28V. This micromotor P is being continuously controllable through the foot pressure which is exerted to the tube controller 1 in Fig. 1. The circuit is fed through a fuse by 24V alternating current and the alternating signal is rectified by a bridge cel d1 and smoothened by a capacitor c1. A first voltage stabilization integrated circuit chip IC3 is fed through a resistor r1 and a zener diode d2 and it supplies a stabilized tension of 12V which is used as a voltage supply to the remaining integral circuit chips IC1, IC2 and IC4. IC4 supplies a stabilized voltage of 5V which is used as a reference voltage whereas integrated circuit chip IC5 is fed with a rough direct voltage of about 30V and this IC5 energizes the motor power at terminals D and E.

The operation of the tube control circuit of Fig. 3 takes place as follows. Changes occurring in the air pressure by depressing the tube are fed as an input signal to IC1, thereby causing voltage changes at the output at F. The rather costly IC1 is protected by resistor r2, and IC2 buffering the output signal of this IC G, which buffered voltage is distributed over three amplifiers IC2. The voltage at G is invertedly amplified through resistances r7—r9 in IC2 (H) and compared with the adjustable reference voltage at the not inverting input. The output signal of IC2 (H) is given to the non inverting input of IC5 and the extent of amplification is defined by the resistors r13—r16 and potential meter p4. Voltage G is also put on the amplifier circuits K and L which are made adjustable by means of the potential meters p1 and p2 respectively. The output signals of these amplifiers K and L control through t1 and t2 respectively relays 1 and 2 respectively. Relay 2 is firstly activated and is used to pass on the voltage on terminals D and E to the electric micromotor P. This relay is indispensable because of the low rest voltage of IC5 when not being actuated. Relay 1 is used to energize at sufficient air pressure sensed by IC1 a magnetic valve. For dental applications this makes it possible to switch on water spray cooling.

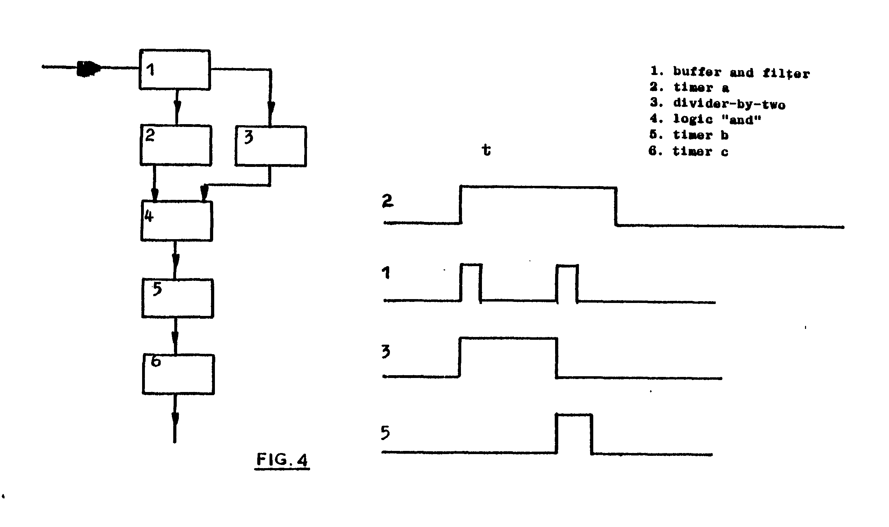

According to Fig. 4 the controlling function of the tube control device can still be improved by extending the circuit by a pulse detector. A signal from the tube control circuit is passed on to a separate buffer and filter 1. The first timing circuit is actuated each time the tube is actuated by depressing it and repeated actuation does not result in any consequences. Only if starting from the position of rest of the tube two short pressure signals are operated within the time traject t a second timing circuit becomes actuated through a divider-by-two 3 and a logic "and" gate 4. The signal output of the second timing circuit can be applied for various purposes such as: 1. switching on a tubomatic electric motor which serves the purpose to bring back the dental tool which is no longer in use to its supporting clip; 2. reversing the direction of rotation. The circuit could e.g. be used to operate by foot a microscope as being in use for micro surgery; 3. switching over to another frequency as being in use for electro surgery, and 4. operating any kind of other device, e.g. the door of the dentist's waiting room.

The diagrammatic pulse detecting circuit according to Fig. 4 can be readily performed by means of conventional logic components. For larger series, however, it may be more efficient to employ a small microprocessor. In case the pulse detecting circuit is used for returning the dental tools back to their tool stand, it is recommended to let an audible signal precede the pretended operation.

Where reference is made in the description to "dental" application, it will be clear that all kind of other surgical applications could be considered as well so that the invention is not restricted to dental purposes only, rather widening the scope to all similar applications.

## Claim

A control device for dental tools and the like, comprising a pneumatic system with an elongated, foot depressable air filled tube (2) connected to an air pressure chamber (4) in communication with the environment through an electrically controlled valve (5) which is closed when under electric power, an on/off main power switch set on by lifting a dental tool (6, 7) from its tool holder and thus actuating said electrically controlled valve (5); said air pressure chamber (4) being connected to an air pressure sensing control means (15) for delivering an electric control signal to said lifted dental tool (6, 7) if the air filled tube (2) is depressed by foot, characterized in that said air pressure control means (15) comprises an electronic circuit comprising a pressure sensitive integrated circuit (IC1) for delivering continuous electric output signals in response to depressing of the air filled tube (2) when said tool (6, 7) has been lifted from its tool holder, the magnitude of said output signals corresponding to the foot pressure on said air filled tube; a first output of said electronic circuit which delivers the said control signal being provided with a first blocking means (re12) for blocking output signals below a first minimum level, a second output of said electronic circuit for imposing on said tool (6, 7) a second function at a predetermined higher foot pressure said second output being provided with a second blocking means (re11) for blocking output signals below a second level higher than said first level.

## Patentanspruch

Steuervorrichtung für dentologische Geräte und dergleichen, umfassend ein pneumatisches System mit einem langgestreckten, mit dem Fuss eindrückbaren, mit Luft gefüllten Rohr (2), das mit einer Luftdruckkammer (4) verbunden ist, die mit der Umgebung durch ein elektrische gesteuertes Ventil (5) in Verbindung steht, das unter elektrischer Kraft geschlossen ist, einen Ein/Aus-Hauptkraftschalter der durch Aufheben eines dentologischen Geräts (6, 7) aus seinem Geräthalter in Betrieb gesetzt wird und so das elektrisch gesteuerte Ventil (5) betätigt; wobei die genannte Luftdruckkammer (4) mit einem Luftdruckabtastbetätigungsorgan (15) zur Lieferung eines elektrischen Steuersignals an das genannte aufgehobene dentologische Gerät (6, 7) verbunden ist, wenn das met Luft gefüllte Rohr (2) mit dem Fuss eingedrückt ist, dadurch gekennzeichnet, dass das genannte Luftdrucksteuerorgan (15) einen elektronischen Stromkreis umfasst, der einen druckempfindlichen integrierten Schaltkreis (IC1) zur Lieferung von ununterbrochenen elektrischen Ausgangssignalen in Antwort auf des Eindrücken des met Luft gefüllten Rohres (2) umfasst, wenn das Gerät (6, 7) von seinem Geräthalter aufgehoben ist, wobei der Grösse der genannten Ausgangssignale dem Fussdruck auf dem mit Luft gefüllten Rohr entspricht; während ein erster Ausgang des genannten elektronischen Schaltkreises, der das genannte Steuersignal liefert mit einem ersten Blockungsorgan (re 12) sur Blokkung von Ausgangssignalen unterhalb eines ersten Minimalniveaus versehen ist, während ein zweiter Ausgang des genannten elektronischen Schaltkreises zur Verleihung einer zweiten Funktion an das genannte Gerät (6, 7) bei einem im voraus bestimmten höheren Fussdruck vorgesehen ist, welcher zweite Ausgang mit einem zweiten Blockungsorgan (re 11) zur Blockung von Ausgangssignalen unterhalb eines zweiten Niveaus höher als das genannte erste Niveau versehen ist.

## Revendication

Dispositif de commande pour outils dentaires et équivalents, comprenant un système pneumatique avec un tube rempli d'air (2) actionnable au pied relié à une chambre de pression d'air (4) en communication avec l'environnement par l'intermédiaire d'une vanne (5) commandée électriquement qui est fermée lorsqu'elle est sous tension électrique, un commutateur de tension secteur marche/arrêt mis sous tension lorsque l'on soulève l'outil dentaire (6, 7) de son support et actionnant ainsi la vanne commandée électriquement (5); la chambre de pression d'air (4) étant reliée à une commande de capteur de pression d'air (15) destinée à fournir un signal de commande électrique à l'outil dentaire (6, 7) soulevé de son support lorsque le tube rempli d'air (2) est actionnée au pied, charactérisé en ce que le moyen de commande de pression d'air (15) comprend un circuit électronique constitué par un circuit intégré sensible à la pression (IC1) destiné à fournir des signaux de sortie électriques continus en réponse à l'actionnement sur le tube rempli d'air (2) lorsque l'outil (6, 7) a été soulevé de son support, l'ampleur des signaux de sortie correspondant à la pression d'actionnement au pied sur le tube rempli d'air; une première sorti du circuit électronique qui achemine le signal de commande étant munie d'un premier moyen de blocage (re12) destiné à bloquer les signaux de sortie au-dessous d'un premier niveau minimum, une seconde sortie du circuit électronique destinée à imposer à l'outil (6, 7) une seconde fonction à une pression d'actionnement au pied supérieure prédéterminée, cette seconde sorte étant munie d'un second moyen de blocage (re11) destiné à bloquer les signaux de sortie au-dessous d'un second niveau supérieure à ce premier niveau.

FIG. 1

FIG. 2

FIG. 3

EP 0 128 138 B1

FIG. 4

1. buffer and filter
2. timer a
3. divider-by-two
4. logic "and"
5. timer b
6. timer c

t

2

1

3

5

EP 0 128 138 B1